(19) Europäisches Patentamt
European Patent Office
Office européen des brevets

(11) EP 3 613 611 A1

(12) # EUROPEAN PATENT APPLICATION
published in accordance with Art. 153(4) EPC

(43) Date of publication:
**26.02.2020 Bulletin 2020/09**

(21) Application number: **18787330.2**

(22) Date of filing: **29.03.2018**

(51) Int Cl.:
***B60C 5/01*** *(2006.01)* ***B60C 1/00*** *(2006.01)*

(86) International application number:
**PCT/JP2018/013439**

(87) International publication number:
**WO 2018/193811 (25.10.2018 Gazette 2018/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.04.2017 JP 2017082200**

(71) Applicant: **Bridgestone Corporation**
**Tokyo 104-8340 (JP)**

(72) Inventor: **YAMASHITA, Hiromasa**
**Tokyo 104-8340 (JP)**

(74) Representative: **Oxley, Robin John George**
**Marks & Clerk LLP**
**15 Fetter Lane**
**London EC4A 1BW (GB)**

(54) **TIRE**

(57) A tire including a tire frame formed from a resin material containing a thermoplastic elastomer, wherein the thermoplastic elastomer has an amorphous moiety thickness La, as measured by a small-angle X-ray scattering method, in a range of from 12.3 nm to 13.9 nm.

FIG.1A

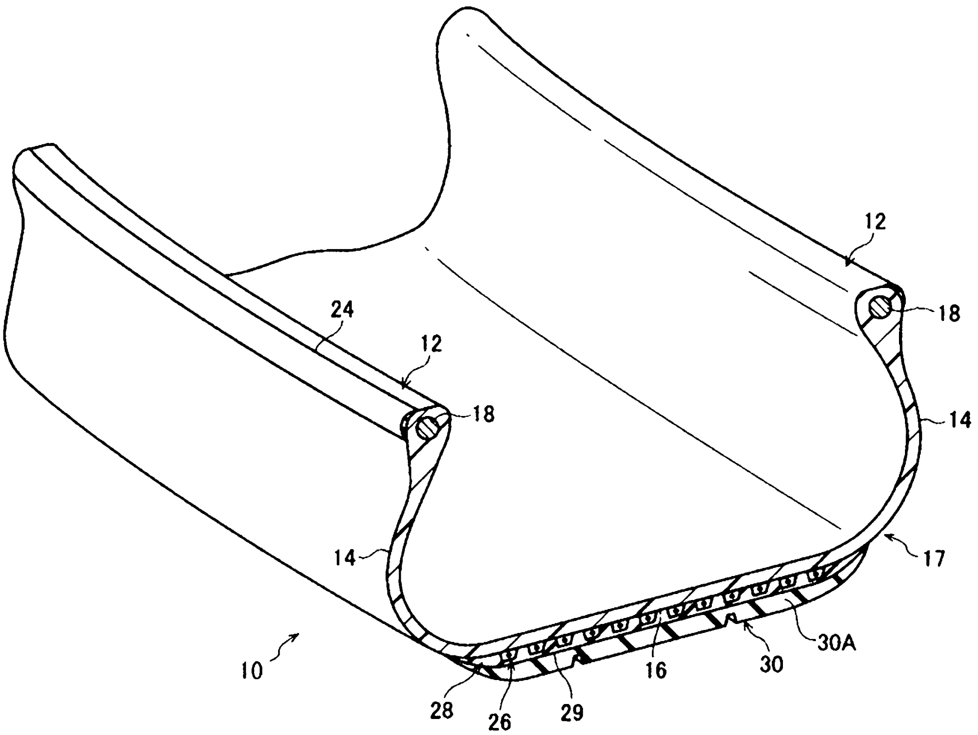


EP 3 613 611 A1

## Description

### TECHNICAL FIELD

The present disclosure relates to a tire.

### BACKGROUND ART

Conventionally, as pneumatic tires used on vehicles such as passenger cars, tires in which a resin material, particularly a thermoplastic resin, a thermoplastic elastomer or the like, is used as a material have been examined from the standpoints of weight reduction, ease of molding, and recyclability. Such thermoplastic polymer materials (i.e., thermoplastic resins) have many advantages from the standpoint of improving the productivity in that, for example, they are injection-moldable.

For example, there has been proposed a tire that is formed from a thermoplastic resin material and includes a circular tire frame, which tire has a reinforcing cord member wound on the outer periphery of the tire frame in the circumferential direction to form a reinforcing cord layer and in which the thermoplastic resin material contains at least a polyester-based thermoplastic elastomer (see Patent Document 1).

[Patent Document 1] Japanese Patent Application Laid-Open (JP-A) No. 2012-046025

### SUMMARY OF INVENTION

#### Technical Problem

In a tire frame produced using a resin material, the state of the tire frame is influenced by the state of the resin material in a produced tire. Therefore, it is believed that the properties (e.g., durability) of the tire frame, ultimately the tire, can be improved to a desired state by appropriately controlling the state of the resin material. However, it remains to be examined as to from which standpoint the state of the resin material should be controlled in order to realize the desired properties.

In view of the above-described circumstances, an object of the disclosure is to provide a tire that includes a tire frame containing a thermoplastic elastomer as a resin contained in a resin material and has excellent durability.

#### Solution to Problem

The above-described problem can be solved by the following disclosure.

<1> A tire, comprising a tire frame formed from a resin material containing a thermoplastic elastomer, wherein the thermoplastic elastomer has an amorphous moiety thickness La, as measured by a small-angle X-ray scattering method, in a range of from 12.3 nm to 13.9 nm.

#### Advantageous Effects of Invention

According to the disclosure, a tire that includes a tire frame containing a thermoplastic elastomer as a resin contained in a resin material and has excellent durability can be provided.

### BRIEF DESCRIPTION OF DRAWINGS

FIG. 1A is a perspective view illustrating a cross-section of a part of a tire according to one embodiment of the disclosure;
FIG. 1B is a cross-sectional view of a bead portion fitted to a rim;
FIG. 2 is a cross-sectional view taken along a tire rotation axis, which illustrates a state where a reinforcing cord is embedded in a crown portion of a tire case of a tire according to the present embodiment; and
FIG. 3 is a drawing for explaining operations of embedding the reinforcing cord in the crown portion of tire case using a cord heating device and rollers.

DESCRIPTION OF EMBODIMENTS

Specific embodiments of the disclosure are described below in detail. However, the disclosure is not restricted to the following embodiments by any means, and the disclosure can be carried out with modifications as appropriate within the intended scope of the disclosure.

The term "resin" used herein is a concept that encompasses thermoplastic resins, thermoplastic elastomers and thermosetting resins, but not vulcanized rubbers. Further, in the descriptions of resins below, the term "same kind" means that the resins of interest have a common skeleton as the skeleton constituting the main chain of each resin as in, for example, ester-based resins or styrene-based resins.

The term "thermoplastic elastomer" used herein refers to a polymer compound composed of a copolymer that includes a polymer constituting a crystalline high-melting-point hard segment or a hard segment having a high cohesive strength, and a polymer constituting an amorphous low-glass-transition-temperature soft segment. Such a thermoplastic elastomer is softened and fluidized as the temperature is increased, and becomes relatively hard and strong when cooled. Further, the thermoplastic elastomer is a polymer compound having rubber-like elasticity.

The term "hard segment" used herein refers to a component that is relatively harder than a soft segment, and the term "soft segment" used herein refers to a component that is relatively softer than a hard segment. The hard segment is preferably a molecule-restraining component that functions as a crosslinking point of a cross-linked rubber to inhibit plastic deformation. Meanwhile, the soft segment is preferably a flexible component that exhibits rubber elasticity.

In the present specification, those numerical ranges that are stated with "to" each denote a range that includes the numerical values stated before and after "to" as the lower and upper limit values, respectively.

The term "step" used herein encompasses not only discrete steps but also steps which cannot be clearly distinguished from other steps, as long as the intended purpose of the step is achieved.

<Tire>

The tire according to the present embodiment includes a tire frame formed from a resin material containing a thermoplastic elastomer (i.e., a tire frame that is partially or entirely formed from the resin material alone). The thermoplastic elastomer has an amorphous moiety thickness La, as measured by a small-angle X-ray scattering method, in a range of from 12.3 nm to 13.9 nm.

According to the studies conducted by the present inventor, it was revealed that a tire having a tire frame that is formed using a thermoplastic elastomer having an amorphous moiety thickness La in the above-described range exhibits superior durability (particularly crack resistance) as compared to a tire having a tire frame that is formed using only a thermoplastic elastomer having an amorphous moiety thickness La outside the above-described range.

• Amorphous Moiety Thickness La

In the present specification, the amorphous moiety thickness La of the thermoplastic elastomer means the thickness of one amorphous moiety in a repeating structure of the thermoplastic elastomer constituted by crystalline moieties of hard segments and amorphous moieties. In the present specification, the amorphous moiety thickness La is measured as described below by a small-angle X-ray scattering method using a sample collected from the tire frame or a sample prepared from the resin material used for the formation of the tire frame.

A long period L is defined as $2\pi/q_{max}$, wherein $q_{max}$ is a wavenumber q [$nm^{-1}$] showing a primary peak of small-angle X-ray scattering. Further, a crystalline moiety thickness is defined as Lc. This Lc can be calculated from an intersection of a function representing the initial slope and a function representing a minimum value in the below-described one-dimensional autocorrelation function γ(r). By using these elements, the amorphous moiety thickness La is defined as "La = L - Lc".

A tire having a tire frame that is formed using a thermoplastic elastomer having an amorphous moiety thickness La in the above-described range exhibits excellent durability. The reason for this is not clear; however, it is presumed as follows.

An amorphous moiety thickness La of 12.3 nm or greater is believed to indicate that the molecular chains of the amorphous moieties are elongated in the repeating structure constituted by the crystalline moieties of the hard segments and the amorphous moieties. This leads to an improvement in the orientation (i.e., the degree of alignment) of the molecular chains of the amorphous moieties. It is believed that, as a result, the buffering property of the thermoplastic elastomer is enhanced and the durability of the tire, particularly the crack resistance against impact, is improved.

On the other hand, an amorphous moiety thickness La of 13.9 nm or less is believed to indicate that the molecular chains of the amorphous moieties are not excessively elongated in the repeating structure constituted by the crystalline moieties of the hard segments and the amorphous moieties. Therefore, a reduction in the strength of the molecular chains of the amorphous moieties due to excessive elongation is suppressed. It is believed that, as a result,

the strength of the thermoplastic elastomer is ensured and the durability of the tire, particularly the crack resistance against impact, is improved.

The amorphous moiety thickness La is more preferably in a range of from 12.5 nm to 13.7 nm, still more preferably in a range of from 12.8 nm to 13.4 nm.

A method of controlling the value of the amorphous moiety thickness La of the thermoplastic elastomer is not particularly restricted. For example, the value of the amorphous moiety thickness La can be reduced by raising the heating temperature in the formation of the tire frame (e.g., the cylinder temperature and/or the mold temperature in injection molding). On the other hand, the value of the amorphous moiety thickness La can be increased by lowering the heating temperature in the formation of the tire frame (e.g., the cylinder temperature and/or the mold temperature).

• Long Period L

In the tire according to the present embodiment, the thermoplastic elastomer contained in the tire frame preferably has a long period L, as measured by a small-angle X-ray scattering method, in a range of from 15.6 nm to 17.1 nm.

In the present specification, the long period L of the thermoplastic elastomer refers to a total value of the thickness of the crystalline moiety and the thickness of the amorphous moiety in a repeating unit constituted by one crystalline moiety and one amorphous moiety in the repeating structure of the thermoplastic elastomer constituted by crystalline moieties of hard segments and amorphous moieties. In the present specification, the value of the long period L is determined as follows by a small-angle X-ray scattering method using a sample collected from the tire frame or a sample prepared from the resin material used for the formation of the tire frame.

The long period L is defined as the value of r, which corresponds to a primary peak obtained by plotting, with respect to r, a one-dimensional autocorrelation function γ(r) determined from the values of one-dimensional autocorrelation function. In the following formula, "q" represents a wavenumber [$nm^{-1}$] showing a primary peak of small-angle X-ray scattering; "r" has a dimension of distance at an arbitrary point in the polymer space; and "I(q)" represents an X-ray scattering intensity.

$$\text{One-dimensional autocorrelation function } \gamma(r) = (\int I(q)q^2\cos(rq)dq)/(\int I(q)q^2dq)$$

By controlling the long period L in the above-described range, the durability of the tire, particularly the crack resistance against impact, is improved. This is believed to be because, when the long period L is 15.6 nm or greater, friction between molecules is reduced and the durability of the tire is thereby improved. Meanwhile, when the long period L is 17.1 nm or less, an increase in the elastic modulus due to excessive elongation of the molecular chains is suppressed, and the durability of the tire is believed to be improved from this standpoint as well.

The long period L is more preferably in a range of from 15.8 nm to 17.0 nm, still more preferably in a range of from 16.1 nm to 16.7 nm.

The value of the long period L increases as the amorphous moiety thickness La of the thermoplastic elastomer is increased. Further, the value of the long period L increases as the growth of the crystalline moieties in the thermoplastic elastomer is facilitated and the thickness of each crystalline moiety is thereby increased. The larger the long period L, the higher the melting point of the thermoplastic elastomer tends to be.

A method of controlling the value of the long period L of the thermoplastic elastomer is not particularly restricted, and examples thereof include a method of controlling the value of the amorphous moiety thickness La as described above. Further, the value of the long period L can be increased by raising the heating temperature in the formation of the tire frame (e.g., the cylinder temperature and/or the mold temperature) and thereby extending the time required for cooling and facilitating the growth of crystals. On the other hand, the value of the long period L can be reduced by lowering the heating temperature in the formation of the tire frame (e.g., the cylinder temperature and/or the mold temperature) and thereby shortening the time required for cooling and suppressing the growth of crystals.

• Orientation Degree f

In the tire according to the present embodiment, the thermoplastic elastomer contained in the tire frame preferably has an orientation degree f, as measured by a small-angle X-ray scattering method, in a range of from -0.08 to 0.08 (i.e., the absolute value of the orientation degree f is preferably from 0 to 0.08).

In the present specification, the orientation degree f of the thermoplastic elastomer means the orientation degree of molecules in the crystalline moieties of the hard segments in the thermoplastic elastomer. The smaller the absolute value of the orientation degree f, the more random is the orientation state of the molecules. In the present specification, the orientation degree f is a value calculated using the following formula, wherein "θ" represents a crystal orientation

angle measured by a small-angle X-ray scattering method using a sample collected from the tire frame or a sample prepared from the resin material used for the formation of the tire frame:

$$f = 1/2 \times (3 \times < \cos^2\theta > -1)$$

With the orientation degree f being in a range of from -0.08 to 0.08, the durability of the tire, particularly the crack resistance against impact, is improved. This is presumed to be because, by controlling the orientation degree f in the above-described range, mechanical inputs to the tire frame during running can be effectively dispersed and the mechanical strength is thus improved.

The orientation degree f is more preferably in a range of from -0.08 to 0.04, still more preferably in a range of from -0.02 to 0.02.

A method of controlling the value of the orientation degree f of the thermoplastic elastomer is not particularly restricted. The orientation degree f can be controlled by, for example, adjusting the temperature of the thermoplastic elastomer, the cylinder temperature, the mold temperature, the cooling rate and the like at the time of performing injection molding for the formation of the tire frame. For example, the temperature at which the thermoplastic elastomer is injection-molded is raised (i.e., the temperature of the thermoplastic elastomer is raised) to reduce the viscosity, and the cylinder temperature and/or the mold temperature is/are raised to extend the time required for cooling and relax the molecular motion, whereby the orientation degree f can be reduced.

• Crystallization Degree Xc

In the tire according to the present embodiment, the thermoplastic elastomer contained in the tire frame preferably has a crystallization degree Xc, as measured by a wide-angle X-ray scattering method, in a range of from 12% to 45%.

In the present specification, the crystallization degree Xc of the thermoplastic elastomer represents a ratio of the crystalline moieties in the hard segments of the thermoplastic elastomer. The larger the value of the crystallization degree Xc, the higher is the ratio of the crystalline moieties and the lower is the ratio of the amorphous moieties. In the present specification, the crystallization degree Xc is a value calculated by the following formula, wherein the crystalline scattering intensity area and the amorphous scattering intensity area are determined by a wide-angle X-ray scattering method using a sample collected from the tire frame or a sample prepared from the resin material used for the formation of the tire frame:

$$Xc\ (\%) = (\text{Crystalline scattering intensity area})/(\text{Crystalline scattering intensity area} + \text{Amorphous scattering intensity area}) \times 100$$

With the crystallization degree Xc being in a range of from 12% to 45%, the durability of the tire, particularly the crack resistance against impact, is improved. This is presumed to be because the heat resistance is enhanced when the crystallization degree Xc is 12% or higher, while a breakdown phenomenon originating from a crystal is suppressed when the crystallization degree Xc is 45% or lower.

The crystallization degree Xc is more preferably from 12% to 37%.

A method of controlling the value of the crystallization degree Xc of the thermoplastic elastomer is not particularly restricted. For example, the crystallization degree Xc can be increased by raising the heating temperature (e.g., the cylinder temperature and/or the mold temperature) in the formation of the tire frame and thereby extending the time required for cooling and facilitating the growth of crystals. On the other hand, the crystallization degree Xc can be reduced by lowering the mold temperature during cooling and thereby shortening the time required for cooling and suppressing the growth of crystals.

[Resin Material]

The resin material contains the thermoplastic elastomer and, as desired, may further contain a component(s) other than the thermoplastic elastomer, such as an additive(s).

The type of the thermoplastic elastomer used for the formation of the tire frame is not particularly restricted. Examples thereof include a polyester-based thermoplastic elastomer (TPC), a polyamide-based thermoplastic elastomer (TPA), a polystyrene-based thermoplastic elastomer (TPS), a polyurethane-based thermoplastic elastomer (TPU), an

olefin-based thermoplastic elastomer (TPO), a thermoplastic rubber vulcanizate (TPV), and other thermoplastic elastomers (TPZ). With regard to the definition and the classification of these thermoplastic elastomers, reference can be made to JIS K6418.

Among the above-exemplified thermoplastic elastomers, a polyester-based thermoplastic elastomer is preferred because of its advantageous feature of having superior bending fatigue resistance than other thermoplastic elastomers. A tire containing such a polyester-based thermoplastic elastomer exhibits high durability since the high bending fatigue resistance of the polyester-based thermoplastic elastomer suppresses the generation and growth of a fatigue crack against repeatedly applied bending stress.

-Polyester-Based Thermoplastic Elastomer-

The polyester-based thermoplastic elastomer is an elastic polymer compound that is a thermoplastic resin material composed of a copolymer including a polyester-containing polymer constituting a crystalline high-melting-point hard segment and a polymer constituting an amorphous low-glass-transition-temperature soft segment. The term "polyester-based thermoplastic elastomer" used herein means a thermoplastic elastomer whose structure includes a partial structure composed of a polyester. Examples of the polyester-based thermoplastic elastomer include the ester-based thermoplastic elastomers (TPC) defined in JIS K6418:2007.

The polyester-based thermoplastic elastomer may be, for example, a material in which at least a polyester constitutes a crystalline high-melting-point hard segment and other polymer (e.g., a polyester or a polyether) constitutes an amorphous low-glass-transition-temperature soft segment.

As the polyester constituting the hard segment, for example, an aromatic polyester can be used. The aromatic polyester can be formed from, for example, an aromatic dicarboxylic acid or an ester-forming derivative thereof, and an aliphatic diol.

One example of the aromatic polyester is a polybutylene terephthalate derived from terephthalic acid and/or dimethyl terephthalate and 1,4-butanediol. The aromatic polyester may also be a polyester derived from a dicarboxylic acid component (e.g., isophthalic acid, phthalic acid, naphthalene-2,6-dicarboxylic acid, naphthalene-2,7-dicarboxylic acid, diphenyl-4,4'-dicarboxylic acid, diphenoxyethane dicarboxylic acid, 5-sulfoisophthalic acid, or an ester-forming derivative thereof) and a diol component, such as a diol having a molecular weight of 300 or less (e.g., an aliphatic diol, such as ethylene glycol, trimethylene glycol, pentamethylene glycol, hexamethylene glycol, neopentyl glycol, or decamethylene glycol; an alicyclic diol, such as 1,4-cyclohexane dimethanol or tricyclodecane dimethylol; or an aromatic diol, such as xylylene glycol, bis(*p*-hydroxy)diphenyl, bis(*p*-hydroxyphenyl)propane, 2,2-bis[4-(2-hydroxyethoxy)phenyl]propane, bis[4-(2-hydroxy)phenyl]sulfone, 1,1-bis[4-(2-hydroxyethoxy)phenyl]cyclohexane, 4,4'-dihydroxy-*p*-terphenyl, or 4,4'-dihydroxy-*p*-quaterphenyl). Alternatively, the aromatic polyester may be a copolymerized polyester in which two or more kinds of these dicarboxylic acid components and diol components are used in combination. It is also possible to copolymerize, for example, a polyfunctional carboxylic acid component, a polyfunctional oxyacid component or a polyfunctional hydroxy component, which has three or more functional groups, in a range of 5% by mole or less.

Examples of the polyester constituting the hard segment include polyethylene terephthalates, polybutylene terephthalates, polymethylene terephthalates, polyethylene naphthalates, and polybutylene naphthalates, among which a polybutylene terephthalate is preferred.

The polymer constituting the soft segment may be, for example, an aliphatic polyester or an aliphatic polyether.

Examples of the aliphatic polyether include poly(ethylene oxide) glycols, poly(propylene oxide) glycols, poly(tetramethylene oxide) glycols, poly(hexamethylene oxide) glycols, copolymers of ethylene oxide and propylene oxide, ethylene oxide addition polymers of poly(propylene oxide) glycols, and copolymers of ethylene oxide and tetrahydrofuran.

Examples of the aliphatic polyester include poly($\varepsilon$-caprolactone)s, polyenantholactones, polycaprylolactones, polybutylene adipates, and polyethylene adipates.

Among these aliphatic polyethers and aliphatic polyesters, from the standpoint of the elastic properties of the resulting polyester block copolymer, for example, a poly(tetramethylene oxide) glycol, an ethylene oxide adduct of a poly(propylene oxide) glycol, a poly($\varepsilon$-caprolactone), a polybutylene adipate, or a polyethylene adipate is preferred as the polymer constituting the soft segment.

From the standpoints of the toughness and the low-temperature flexibility, the number-average molecular weight of the polymer (i.e., polyester) constituting the hard segment is preferably from 300 to 6,000.

Meanwhile, from the standpoints of the toughness and the low-temperature flexibility, the number-average molecular weight of the polymer constituting the soft segment is preferably from 300 to 6,000.

Further, from the standpoint of the moldability of the tire frame, the mass ratio (x:y) of the hard segment (x) and the soft segment (y) is preferably from 99:1 to 20:80, more preferably from 98:2 to 30:70.

Examples of a combination of the hard segment and the soft segment include combinations of any of the above-described hard segments and any of the above-described soft segments. Thereamong, as the combination of the hard segment and the soft segment, a combination in which the hard segment is a polybutylene terephthalate and the soft

segment is an aliphatic polyether is preferred, and a combination in which the hard segment is a polybutylene terephthalate and the soft segment is a poly(ethylene oxide) glycol is more preferred.

As commercially available products of the polyester-based thermoplastic elastomer, for example, "HYTREL" Series manufactured by DuPont-Toray Co., Ltd. (e.g., 3046, 5557, 6347, 4047N, and 4767N), and "PELPRENE" Series manufactured by TOYOBO Co., Ltd. (e.g., P30B, P40B, P40H, P55B, P70B, P150B, P280B, E450B, P150M, S1001, S2001, S5001, S6001, and S9001) can be used.

The polyester-based thermoplastic elastomer can be synthesized by copolymerizing the polymer constituting the hard segment and the polymer constituting the soft segment by a known method.

In the present embodiment, when the resin material contains the polyester-based thermoplastic elastomer, the content ratio of the polyester-based thermoplastic elastomer with respect to all thermoplastic elastomers contained in the resin material is not particularly restricted; however, it is preferably not less than 50% by mass, more preferably not less than 80% by mass, still more preferably not less than 90% by mass, with respect to a total amount of all resins. When the content ratio of the polyester-based thermoplastic elastomer is 50% by mass or higher with respect to a total amount of thermoplastic elastomers, the properties of the polyester-based thermoplastic elastomer can be exerted sufficiently, so that the durability of the tire is likely to be further improved.

-Polyamide-Based Thermoplastic Elastomer-

The term "polyamide-based thermoplastic elastomer" used herein means a thermoplastic resin material composed of a copolymer that includes a polymer constituting a crystalline high-melting-point hard segment and a polymer constituting an amorphous low-glass-transition-temperature soft segment, wherein the polymer constituting the hard segment has an amide bond (-CONH-) in its main chain.

Examples of the polyamide-based thermoplastic elastomer include materials in which at least a polyamide constitutes a crystalline high-melting-point hard segment and other polymer (e.g., a polyester or a polyether) constitutes an amorphous low-glass-transition-temperature soft segment. The polyamide-based thermoplastic elastomer may be formed using a chain extender such as a dicarboxylic acid, in addition to the hard segment and the soft segment.

Specific examples of the polyamide-based thermoplastic elastomer include the amide-based thermoplastic elastomers (TPA) defined in JIS K6418:2007 and polyamide-based elastomers described in JP-ANo. 2004-346273.

In the polyamide-based thermoplastic elastomer, the polyamide constituting the hard segment is, for example, a polyamide formed from a monomer represented by the following Formula (1) or (2).

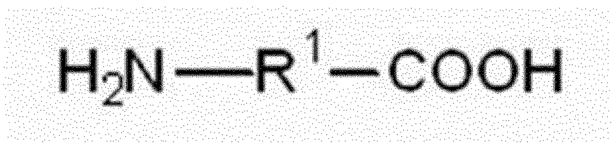

Formula (1)

[wherein, $R^1$ represents a hydrocarbon molecular chain having from 2 to 20 carbon atoms (e.g., an alkylene group having from 2 to 20 carbon atoms)]

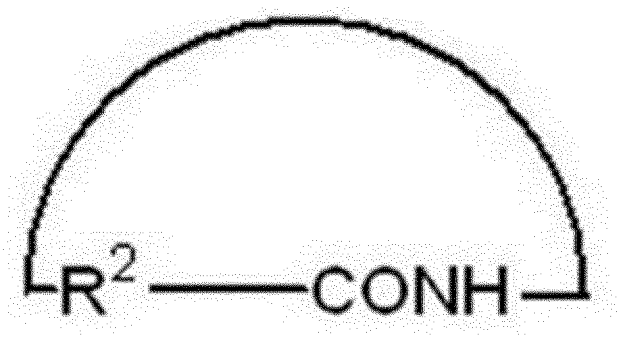

Formula (2)

[wherein, $R^2$ represents a hydrocarbon molecular chain having from 3 to 20 carbon atoms (e.g., an alkylene group having from 3 to 20 carbon atoms)]

In Formula (1), $R^1$ is preferably a hydrocarbon molecular chain having from 3 to 18 carbon atoms (e.g., an alkylene group having from 3 to 18 carbon atoms), more preferably a hydrocarbon molecular chain having from 4 to 15 carbon atoms (e.g., an alkylene group having from 4 to 15 carbon atoms), particularly preferably a hydrocarbon molecular chain having from 10 to 15 carbon atom (e.g., an alkylene group having from 10 to 15 carbon atoms).

Further, in Formula (2), $R^2$ is preferably a hydrocarbon molecular chain having from 3 to 18 carbon atoms (e.g., an alkylene group having from 3 to 18 carbon atoms), more preferably a hydrocarbon molecular chain having from 4 to 15 carbon atom (e.g., an alkylene group having from 4 to 15 carbon atoms), particularly preferably a hydrocarbon molecular chain having from 10 to 15 carbon atoms (e.g., an alkylene group having from 10 to 15 carbon atoms).

Examples of the monomer represented by Formula (1) or (2) include $\omega$-aminocarboxylic acids and lactams. Examples of the polyamide constituting the hard segment include polycondensates of an $\omega$-aminocarboxylic acid or a lactam, and co-polycondensates of a diamine and a dicarboxylic acid.

Examples of the $\omega$-aminocarboxylic acids include aliphatic $\omega$-aminocarboxylic acids having from 5 to 20 carbon atoms, such as 6-aminocaproic acid, 7-aminoheptanoic acid, 8-aminooctanoic acid, 10-aminocapric acid, 11-aminoundecanoic acid, and 12-aminododecanoic acid. Examples of the lactams include aliphatic lactams having from 5 to 20 carbon atoms, such as lauryl lactam, $\varepsilon$-caprolactam, undecane lactam, $\omega$-enantholactam, and 2-pyrrolidone.

Examples of the diamine include diamine compounds, such as aliphatic diamines having from 2 to 20 carbon atoms (e.g., ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-trimethylhexamethylenediamine, 2,4,4-trimethylhexamethylenediamine, 3-methylpentamethylenediamine, and m-xylene diamine).

The dicarboxylic acid may be represented by $HOOC-(R^3)_m-COOH$ ($R^3$: a hydrocarbon molecular chain having from 3 to 20 carbon atoms, m: 0 or 1), and examples thereof include aliphatic dicarboxylic acids having from 2 to 20 carbon atoms, such as oxalic acid, succinic acid, glutaric acid, adipic acid, pimelic acid, suberic acid, azelaic acid, sebacic acid, and dodecanedioic acid.

As the polyamide constituting the hard segment, a polyamide obtained by ring-opening polycondensation of lauryl lactam, $\varepsilon$-caprolactam or undecanelactam can be preferably used.

Examples of the polymer constituting the soft segment include polyesters and polyethers, and specifically polyethylene glycols, polypropylene glycols, polytetramethylene ether glycols, and ABA-type triblock polyethers. These polymers may be used singly, or in combination of two or more kinds thereof. Further, a polyether diamine obtained by allowing ammonia or the like to react with a terminal of a polyether can be used as well.

The term "ABA-type triblock polyether" used herein means a polyether represented by the following Formula (3).

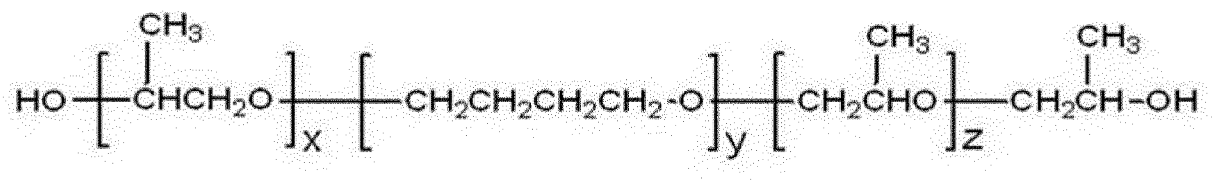

Formula (3)

[wherein, x and z each represent an integer of 1 to 20, and y represents an integer of 4 to 50]

In Formula (3), x and z are each preferably an integer of 1 to 18, more preferably an integer of 1 to 16, still more preferably an integer of 1 to 14, particularly preferably an integer of 1 to 12. Further, in Formula (3), y is preferably an integer of 5 to 45, more preferably an integer of 6 to 40, still more preferably an integer of 7 to 35, particularly preferably an integer of 8 to 30.

Examples of a combination of the hard segment and the soft segment include combinations of any of the above-described hard segments and any of the above-described soft segments. Thereamong, as the combination of the hard segment and the soft segment, a combination of a ring-opened polycondensate of lauryl lactam and a polyethylene glycol, a combination of a ring-opened polycondensate of lauryl lactam and a polypropylene glycol, a combination of a ring-opened polycondensate of lauryl lactam and a polytetramethylene ether glycol, and a combination of a ring-opened polycondensate of lauryl lactam and an ABA-type triblock polyether are preferred, and a combination of a ring-opened polycondensate of lauryl lactam and an ABA-type triblock polyether is more preferred.

From the standpoint of the melt-moldability, the number-average molecular weight of the polymer (i.e., polyamide) constituting the hard segment is preferably from 300 to 15,000. Meanwhile, from the standpoints of the toughness and the low-temperature flexibility, the number-average molecular weight of the polymer constituting the soft segment is preferably from 200 to 6,000. Further, from the standpoint of the moldability of the tire frame, the mass ratio (x:y) of the hard segment (x) and the soft segment (y) is preferably from 50:50 to 90:10, more preferably from 50:50 to 80:20.

The polyamide-based thermoplastic elastomer can be synthesized by copolymerizing the polymer constituting the hard segment and the polymer constituting the soft segment by a known method.

As commercially available products of the polyamide-based thermoplastic elastomer, for example, "UBESTA XPA" Series manufactured by UBE Industries, Ltd. (e.g., XPA9063X1, XPA9055X1, XPA9048X2, XPA9048X1, XPA9040X1, XPA9040X2, and XPA9044), and "VESTAMID" Series manufactured by Daicel-Evonik Ltd. (e.g., E40-S3, E47-S1, E47-S3, E55-S1, E55-S3, EX9200, and E50-R2) can be used.

-Polystyrene-Based Thermoplastic Elastomer-

Examples of the polystyrene-based thermoplastic elastomer include materials in which at least a polystyrene constitutes a hard segment and other polymer (e.g., a polybutadiene, a polyisoprene, a polyethylene, a hydrogenated polybutadiene, or a hydrogenated polyisoprene) constitutes an amorphous low-glass-transition-temperature soft segment. As the polystyrene constituting the hard segment, for example, one obtained by a known radical polymerization method or ionic polymerization method can be preferably used, and specific examples of such a polystyrene include polystyrenes obtained by anionic living polymerization. Examples of the polymer constituting the soft segment include polybutadienes, polyisoprenes, and poly(2,3-dimethyl-butadiene)s.

Examples of a combination of the hard segment and the soft segment include combinations of any of the above-described hard segments and any of the above-described soft segments. Thereamong, as the combination of the hard segment and the soft segment, a combination of a polystyrene and a polybutadiene or a combination of a polystyrene and a polyisoprene are preferred. In order to suppress an unintended crosslinking reaction of the thermoplastic elastomer, the soft segment is preferably hydrogenated.

The number-average molecular weight of the polymer (i.e., polystyrene) constituting the hard segment is preferably from 5,000 to 500,000, more preferably from 10,000 to 200,000.

Meanwhile, the number-average molecular weight of the polymer constituting the soft segment is preferably from 5,000 to 1,000,000, more preferably from 10,000 to 800,000, still more preferably from 30,000 to 500,000. Further, from the standpoint of the moldability of the tire frame, the volume ratio (x:y) of the hard segment (x) and the soft segment (y) is preferably from 5:95 to 80:20, more preferably from 10:90 to 70:30.

The polystyrene-based thermoplastic elastomer can be synthesized by copolymerizing the polymer constituting the hard segment and the polymer constituting the soft segment by a known method.

Examples of the polystyrene-based thermoplastic elastomer include styrene/butadiene-based copolymers [e.g., SBS (polystyrene-poly(butylene) block-polystyrene), SEBS (polystyrene-poly(ethylene/butylene) block-polystyrene)], styrene-isoprene copolymers (e.g., polystyrene-polyisoprene block-polystyrene), styrene-propylene-based copolymers [e.g., SEP (polystyrene-(ethylene/propylene) block), SEPS (polystyrene-poly(ethylene/propylene) block-polystyrene), SEEPS (polystyrene-poly(ethylene-ethylene/propylene) block-polystyrene), and SEB (polystyrene (ethylene/butylene) block)].

As commercially available products of the polystyrene-based thermoplastic elastomer, for example, "TUFTEC" Series manufactured by Asahi Kasei Corporation (e.g., H1031, H1041, H1043, H1051, H1052, H1053, H1062, H1082, H1141, H1221, and H1272) as well as "SEBS" Series (e.g., 8007 and 8076) and "SEPS" Series (e.g., 2002 and 2063), which are manufactured by Kuraray Co., Ltd., can be used.

-Polyurethane-Based Thermoplastic Elastomer-

Examples of the polyurethane-based thermoplastic elastomer include materials in which at least a polyurethane constitutes a hard segment forming pseudo-crosslinks by physical aggregation and other polymer constitutes an amorphous low-glass-transition-temperature soft segment.

Specific examples of the polyurethane-based thermoplastic elastomer include the polyurethane-based thermoplastic elastomers (TPU) defined in JIS K6418: 2007. The polyurethane-based thermoplastic elastomer can be represented as a copolymer that includes a soft segment containing a unit structure represented by the following Formula A and a hard segment containing a unit structure represented by the following Formula B.

Formula A:

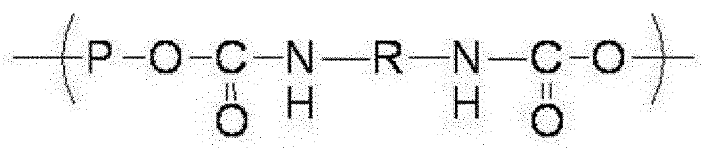

Formula B: 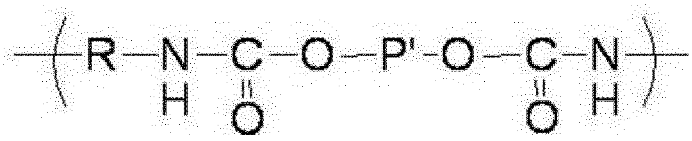

[wherein, P represents a long-chain aliphatic polyether or a long-chain aliphatic polyester; R represents an aliphatic hydrocarbon, an alicyclic hydrocarbon, or an aromatic hydrocarbon; P' represents a short-chain aliphatic hydrocarbon, an alicyclic hydrocarbon, or an aromatic hydrocarbon]

As the long-chain aliphatic polyether or long-chain aliphatic polyester represented by P in Formula A, for example, one having a molecular weight of from 500 to 5,000 can be used. P is derived from a diol compound containing the long-chain aliphatic polyether or long-chain aliphatic polyester represented by P. Examples of such a diol compound include polyethylene glycols, polypropylene glycols, polytetramethylene ether glycols, polybutylene adipate diols, poly-$\varepsilon$-caprolactone diols, poly(hexamethylene carbonate) diols and ABA-type triblock polyethers, which have a molecular weight in the above-described range.

These diol compounds may be used singly, or in combination of two or more kinds thereof.

In Formulae A and B, R is derived from a diisocyanate compound containing the aliphatic hydrocarbon, alicyclic hydrocarbon or aromatic hydrocarbon that is represented by R. Examples of an aliphatic diisocyanate compound containing the aliphatic hydrocarbon represented by R include 1,2-ethylene diisocyanate, 1,3-propylene diisocyanate, 1,4-butane diisocyanate, and 1,6-hexamethylene diisocyanate.

Examples of the diisocyanate compound containing the alicyclic hydrocarbon represented by R include 1,4-cyclohexane diisocyanate and 4,4-cyclohexane diisocyanate. Further, examples of an aromatic diisocyanate compound containing the aromatic hydrocarbon represented by R include 4,4'-diphenyl methane diisocyanate and tolylene diisocyanate.

These diisocyanate compounds may be used singly, or in combination of two or more kinds thereof.

As the short-chain aliphatic hydrocarbon, alicyclic hydrocarbon or aromatic hydrocarbon that is represented by P' in Formula B, for example, one having a molecular weight of less than 500 can be used. P' is derived from a diol compound containing the short-chain aliphatic hydrocarbon, alicyclic hydrocarbon or aromatic hydrocarbon that is represented by P'. Examples of an aliphatic diol compound containing the short-chain aliphatic hydrocarbon represented by P' include glycol and polyalkylene glycols, and specifically ethylene glycol, propylene glycol, trimethylene glycol, 1,4-butanediol, 1,3-butanediol, 1,5-pentanediol, 1,6-hexanediol, 1,7-heptanediol, 1,8-octanediol, 1,9-nonanediol, and 1,10-decanediol.

Examples of an alicyclic diol compound containing the alicyclic hydrocarbon represented by P' include cyclopentane-1,2-diol, cyclohexane-1,2-diol, cyclohexane-1,3-diol, cyclohexane-1,4-diol, and cyclohexane-1,4-dimethanol.

Further, examples of an aromatic diol compound containing the aromatic hydrocarbon represented by P' include hydroquinone, resorcin, chlorohydroquinone, bromohydroquinone, methylhydroquinone, phenylhydroquinone, methoxyhydroquinone, phenoxyhydroquinone, 4,4'-dihydroxybiphenyl, 4,4'-dihydroxydiphenyl ether, 4,4'-dihydroxydiphenylsulfide, 4,4'-dihydroxydiphenylsulfone, 4,4'-dihydroxybenzophenone, 4,4'-dihydroxydiphenylmethane, bisphenol A, 1,1-di(4-hydroxyphenyl)cyclohexane, 1,2-bis(4-hydroxyphenoxy)ethane, 1,4-dihydroxynaphthalene, and 2,6-dihydroxynaphthalene.

These diol compounds may be used singly, or in combination of two or more kinds thereof.

From the standpoint of the melt-moldability, the number-average molecular weight of the polymer (i.e., polyurethane) constituting the hard segment is preferably from 300 to 1,500. Meanwhile, from the standpoints of the flexibility and the thermal stability of the polyurethane-based thermoplastic elastomer, the number-average molecular weight of the polymer constituting the soft segment is preferably from 500 to 20,000, more preferably from 500 to 5,000, particularly preferably from 500 to 3,000. Further, from the standpoint of the moldability of the tire frame, the mass ratio (x:y) of the hard segment (x) and the soft segment (y) is preferably from 15:85 to 90:10, more preferably from 30:70 to 90:10.

The polyurethane-based thermoplastic elastomer can be synthesized by copolymerizing the polymer constituting the hard segment and the polymer constituting the soft segment by a known method. As the polyurethane-based thermoplastic elastomer, a thermoplastic polyurethane described in JP-A No. H05-331256 can be used.

As the polyurethane-based thermoplastic elastomer, specifically a combination of a hard segment composed of only an aromatic diol and an aromatic diisocyanate and a soft segment composed of only a polycarbonate is preferred, and more specifically at least one selected from a tolylene diisocyanate (TDI)/polyester-based polyol copolymer, a TDI/polyether-based polyol copolymer, a TDI/caprolactone-based polyol copolymer, a TDI/polycarbonate-based polyol copolymer, a 4,4'-diphenylmethane diisocyanate (MDI)/polyester-based polyol copolymer, an MDI/polyether-based polyol copolymer, an MDI/caprolactone-based polyol copolymer, an MDI/polycarbonate-based polyol copolymer and an MDI + hydroquinone/polyhexamethylene carbonate copolymer is preferred. Thereamong, at least one selected from a TDI/polyester-based polyol copolymer, a TDI/polyether-based polyol copolymer, an MDI/polyester polyol copolymer, an MDI/polyether-based polyol copolymer and an MDI + hydroquinone/polyhexamethylene carbonate copolymer is more preferred.

As commercially available products of the polyurethane-based thermoplastic elastomer, for example, "ELASTOLLAN" Series manufactured by BASF SE (e.g., ET680, ET880, ET690, and ET890), "KURAMILON U" Series manufactured by Kuraray Co., Ltd. (e.g., 2000s, 3000s, 8000s, and 9000s), and "MIRACTRAN" Series manufactured by Nippon Miractran Co., Ltd. (e.g., XN-2001, XN-2004, P390RSUP, P480RSUI, P26MRNAT, E490, E590, and P890) can be used.

-Olefin-Based Thermoplastic Elastomer-

Examples of the olefin-based thermoplastic elastomer include materials in which at least a polyolefin constitutes a crystalline high-melting-point hard segment and other polymer (e.g., other polyolefin or a polyvinyl compound) constitutes an amorphous low-glass-transition-temperature soft segment. Examples of the polyolefin constituting the hard segment include polyethylenes, polypropylenes, isotactic polypropylenes, and polybutenes.

Examples of the olefin-based thermoplastic elastomer include an olefin-$\alpha$-olefin random copolymer and an olefin block copolymer, and specifically a propylene block copolymer, an ethylene-propylene copolymer, a propylene-1-hexene copolymer, a propylene-4-methyl-1-pentene copolymer, a propylene-1-butene copolymer, an ethylene-1-hexene copolymer, an ethylene-4-methyl-pentene copolymer, an ethylene-1-butene copolymer, a 1-butene-1-hexene copolymer, 1-butene-4-methyl-pentene, an ethylene-methacrylic acid copolymer, an ethylene-methyl methacrylate copolymer, an ethylene-ethyl methacrylate copolymer, an ethylene-butyl methacrylate copolymer, an ethylene-methyl acrylate copolymer, an ethylene-ethyl acrylate copolymer, an ethylene-butyl acrylate copolymer, a propylene-methacrylic acid copolymer, a propylene-methyl methacrylate copolymer, a propylene-ethyl methacrylate copolymer, a propylene-butyl methacrylate copolymer, a propylene-methyl acrylate copolymer, a propylene-ethyl acrylate copolymer, a propylene-butyl acrylate copolymer, an ethylene-vinyl acetate copolymer, and a propylene-vinyl acetate copolymer.

Thereamong, as the olefin-based thermoplastic elastomer, at least one selected from a propylene block copolymer, an ethylene-propylene copolymer, a propylene-1-hexene copolymer, a propylene-4-methyl-1-pentene copolymer, a propylene-1-butene copolymer, an ethylene-1-hexene copolymer, an ethylene-4-methyl-pentene copolymer, an ethylene-1-butene copolymer, an ethylene-methacrylic acid copolymer, an ethylene-methyl methacrylate copolymer, an ethylene-ethyl methacrylate copolymer, an ethylene-butyl methacrylate copolymer, an ethylene-methyl acrylate copolymer, an ethylene-ethyl acrylate copolymer, an ethylene-butyl acrylate copolymer, a propylene-methacrylic acid copolymer, a propylene-methyl methacrylate copolymer, a propylene-ethyl methacrylate copolymer, a propylene-butyl methacrylate copolymer, a propylene-methyl acrylate copolymer, a propylene-ethyl acrylate copolymer, a propylene-butyl acrylate copolymer, an ethylene-vinyl acetate copolymer and a propylene-vinyl acetate copolymer is preferred, and at least one selected from an ethylene-propylene copolymer, a propylene-1-butene copolymer, an ethylene-1-butene copolymer, an ethylene-methyl methacrylate copolymer, an ethylene-methyl acrylate copolymer, an ethylene-ethyl acrylate copolymer and an ethylene-butyl acrylate copolymer is more preferred.

Further, a combination of two or more kinds of olefin resins, such as ethylene and propylene, may be used as well. The content ratio of an olefin resin(s) in the olefin-based thermoplastic elastomer is preferably from 50% by mass to 100% by mass.

The number-average molecular weight of the olefin-based thermoplastic elastomer is preferably from 5,000 to 10,000,000. When the number-average molecular weight of the olefin-based thermoplastic elastomer is from 5,000 to 10,000,000, sufficient mechanical and physical properties and excellent processability are imparted to a thermoplastic resin material. From the same standpoint, the number-average molecular weight of the olefin-based thermoplastic elastomer is more preferably from 7,000 to 1,000,000, particularly preferably from 10,000 to 1,000,000. By this, the mechanical and physical properties and the processability of the thermoplastic resin material can be further improved. Meanwhile, from the standpoints of the toughness and the low-temperature flexibility, the number-average molecular weight of the polymer constituting the soft segment is preferably from 200 to 6,000. Further, from the standpoint of the moldability of the tire frame, the mass ratio (x:y) of the hard segment (x) and the soft segment (y) is preferably from 50:50 to 95:15, more preferably from 50:50 to 90:10.

The olefin-based thermoplastic elastomer can be synthesized by copolymerization in accordance with a known method.

As the olefin-based thermoplastic elastomer, an olefin-based thermoplastic elastomer modified with an acid may be used as well.

The term "olefin-based thermoplastic elastomer modified with an acid" used herein refers to an olefin-based thermoplastic elastomer to which an unsaturated compound having an acidic group, such as a carboxylic acid group, a sulfuric acid group or a phosphoric acid group, is bound.

For the binding of the unsaturated compound having an acidic group, such as a carboxylic acid group, a sulfuric acid group or a phosphoric acid group, to the olefin-based thermoplastic elastomer, for example, an unsaturated bond

moiety of an unsaturated carboxylic acid (e.g., generally maleic anhydride) as the unsaturated compound having an acidic group is bound (e.g., graft-polymerized) to the olefin-based thermoplastic elastomer.

From the standpoint of suppressing deterioration of the olefin-based thermoplastic elastomer, the unsaturated compound having an acidic group is preferably an unsaturated compound having a carboxylic acid group that is a weak acid group, and examples thereof include acrylic acid, methacrylic acid, itaconic acid, crotonic acid, isocrotonic acid, and maleic acid.

As commercially available products of the olefin-based thermoplastic elastomer, for example, "TAFMER" Series manufactured by Mitsui Chemicals, Inc. (e.g., A0550S, A1050S, A4050S, A1070S, A4070S, A35070S, A1085S, A4085S, A7090, A70090, MH7007, MH7010, XM-7070, XM-7080, BL4000, BL2481, BL3110, BL3450, P-0275, P-0375, P-0775, P-0180, P-0280, P-0480, and P-0680), "NUCREL" Series manufactured by Du Pont-Mitsui Polychemicals Co., Ltd. (e.g., AN4214C, AN4225C, AN42115C, N0903HC, N0908C, AN42012C, N410, N1050H, N1108C, N1110H, N1207C, N1214, AN4221C, N1525, N1560, N0200H, AN4228C, AN4213C, and N035C), "ELVALOY AC" Series manufactured by Du Pont-Mitsui Polychemicals Co., Ltd. (e.g., 1125AC, 1209AC, 1218AC, 1609AC, 1820AC, 1913AC, 2112AC, 2116AC, 2615AC, 2715AC, 3117AC, 3427AC, and 3717AC), "ACRYFT" Series and "EVATATE" Series manufactured by Sumitomo Chemical Co., Ltd., "ULTRATHENE" Series manufactured by Tosoh Corporation, and "PRIME TPO" Series manufactured by Prime Polymer Co., Ltd. (e.g., E-2900H, F-3900H, E-2900, F-3900, J-5900, E-2910, F-3910, J-5910, E-2710, F-3710, J-5910, E-2740, F-3740, R110MP, R110E, T310E, and M142E) can be used.

-Additives-

The resin material may also contain a component other than the thermoplastic elastomer as desired. Examples of the component other than the thermoplastic elastomer include rubbers, thermoplastic resins, fillers (e.g., silica, calcium carbonate, and clay), age resistors, oils, plasticizers, color formers, and weather resistant agents.

It is known that the rolling performance of the tire and the injection moldability of the resin material are improved by incorporating a plasticizer into the resin material. However, an addition of a plasticizer in an excessively large amount may affect the adhesion of the resin material with other material due to the occurrence of a blooming/bleeding phenomenon. Therefore, it is preferred to select a plasticizer that is highly compatible with the thermoplastic elastomer to be used, and to thereby ensure the moldability and the safety while inhibiting the blooming/bleeding phenomenon and improving the rolling performance of the tire.

When the resin material contains a component other than the thermoplastic elastomer, from the standpoint of sufficiently attaining the effects of the disclosure, the content ratio of the thermoplastic elastomer in the resin material is preferably not less than 50% by mass, more preferably not less than 80% by mass, still more preferably not less than 90% by mass.

-Physical Properties of Resin Material-

The crystallization temperature of the thermoplastic elastomer contained in the resin material is preferably in a range of from 148°C to 160°C, more preferably in a range of from 150°C to 155°C, still more preferably in a range of from 152°C to 154°C. With the crystallization temperature being in this range, the amorphous moiety thickness La, the long period L, the orientation degree f, the crystallization degree Xc and the like can be easily controlled in the above-described ranges, as a result of which the durability of the tire, particularly the crack resistance against impact, can be easily improved.

The crystallization temperature of the thermoplastic elastomer is measured by differential scanning calorimetry (DSC).

When the resin material contains two or more kinds of thermoplastic elastomers, the crystallization temperature of a thermoplastic elastomer having the highest mass-based content ratio is preferably in the above-described range. It is more preferred that the resin material contains two or more kinds of thermoplastic elastomers having a crystallization temperature in the above-described range, including the thermoplastic elastomer having the highest mass-based content ratio, and it is still more preferred that all of the thermoplastic elastomers contained in the resin material have a crystallization temperature in the above-described range.

The melting point of the resin material is usually from about 100°C to about 350°C; however, from the standpoint of the durability and the productivity of the tire, the melting point of the resin material is preferably from about 100°C to about 250°C, more preferably from 120°C to 250°C.

The tensile elastic modulus, which is defined in JIS K7113:1995, of the resin material (i.e., tire frame) itself is preferably from 50 MPa to 1,000 MPa, more preferably from 50 MPa to 800 MPa, particularly preferably from 50 MPa to 700 MPa. When the tensile elastic modulus of the resin material is from 50 MPa to 1,000 MPa, the tire can be efficiently fitted to a rim while maintaining the shape of the tire frame.

The tensile strength, which is defined in JIS K7113 (1995), of the resin material (i.e., tire frame) itself is usually

from about 15 MPa to about 70 MPa, preferably from 17 MPa to 60 MPa, more preferably from 20 MPa to 55 MPa.

The tensile strength at yield, which is defined in JIS K7113 (1995), of the resin material (i.e., tire frame) itself is preferably not less than 5 MPa, more preferably from 5 MPa to 20 MPa, particularly preferably from 5 MPa to 17 MPa. When the tensile strength at yield of the resin material is 5 MPa or higher, the tire can endure deformation caused by a load applied to the tire during running or the like.

The tensile elongation at yield, which is defined in JIS K7113 (1995), of the resin material (i.e., tire frame) itself is preferably not less than 10%, more preferably from 10% to 70%, particularly preferably from 15% to 60%. When the tensile elongation at yield of the resin material is 10% or greater, a large elastic region is provided, so that favorable rim fittability can be attained.

The tensile elongation at break, which is defined in JIS K7113 (1995), of the resin material (i.e., tire frame) itself is preferably not less than 50%, more preferably not less than 100%, particularly preferably not less than 150%, most preferably not less than 200%. When the tensile elongation at break of the resin material is 50% or greater, favorable rim fittability can be attained, and the tire can be made unlikely to rupture at collision.

The deflection temperature under load (condition: under a load of 0.45 MPa), which is defined in ISO75-2 or ASTM D648, of the resin material (i.e., tire frame) itself is preferably 50°C or higher, more preferably from 50°C to 150°C, particularly preferably from 50°C to 130°C. With the deflection temperature under load of the resin material being 50°C or higher, deformation of the tire frame can be suppressed even when vulcanization is performed in the production of the tire.

The Vicat softening temperature (Method A), which is defined in JIS K7206 (2016), of the resin material (i.e., tire frame) itself is preferably 130°C or higher, more preferably from 130 to 250°C, still more preferably from 130 to 220°C. With the softening temperature (Method A) of the thermoplastic resin material being 130°C or higher, softening and deformation of the tire in use environment can be suppressed. Further, deformation of the tire frame can be suppressed even when vulcanization is performed for bonding in the production of the tire.

[Constitution of Members Other Than Tire Frame in Tire]

The tire according to the present embodiment may include a member(s) other than the tire frame as required. For example, the tire according to the present embodiment may include a reinforcing member that is arranged on the outer periphery of the tire frame or the like for the purpose of reinforcing the tire frame.

Examples of the reinforcing member include a cord member configured to contain a metal member such as a steel cord, and a cord member coated with a coating resin material may be used as well.

A resin used in the coating resin material of the reinforcing member is, for example, a thermosetting resin, a thermoplastic resin, or a thermoplastic elastomer.

Examples of the thermosetting resin include phenol resins, urea resins, melamine resins, epoxy resins, polyamide resins, and polyester resins.

Examples of the thermoplastic resins include urethane resins, olefin resins, vinyl chloride resins, polyamide resins, and polyester resins.

Examples of the thermoplastic elastomer include polyester-based thermoplastic elastomers (TPC), polyamide-based thermoplastic elastomers (TPA), polyolefin-based thermoplastic elastomers (TPO), polystyrene-based thermoplastic elastomers (TPS), polyurethane-based thermoplastic elastomers (TPU), thermoplastic rubber vulcanizates (TPV), and other thermoplastic elastomers (TPZ), all of which are defined in JIS K6418:2007. Taking into consideration the elasticity required during running as well as the moldability and the like in the production, it is preferred to use a thermoplastic elastomer among the above-exemplified resins.

Further, the coating resin material of the reinforcing member preferably contains a thermoplastic elastomer of the same kind as the thermoplastic elastomer contained in the resin material constituting the tire frame.

Further, a reinforcing member having a structure in which a cord member is coated with a coating resin material via an adhesive (i.e., an adhesive layer) may be used as well, and this reinforcing member may be arranged on the tire frame. In this case, it is preferred that the Martens hardness (d1) of the tire frame, the Martens hardness (d2) of the coating resin material, and the Martens hardness (d3) of the adhesive layer satisfy a relationship of $d1 \leq d2 < d3$. By setting the Martens hardness of the coating resin material to be less than the Martens hardness of the adhesive layer and equal to or larger than the Martens hardness of the tire frame, the difference in rigidity between the resin material constituting the tire frame and the cord member is effectively relieved. As a result, the durability of the tire can be further improved.

[Constitution of Tire]

One embodiment of the tire according to the present embodiment will now be described referring to the drawings. It is noted here that members having the same function and effect may be assigned with the same symbol in all of the

drawings and, in such a case, the descriptions of the symbol may be omitted.

FIG. 1A is a perspective view illustrating a cross-section of a part of a tire 10 according to a first embodiment. FIG. 1B is a cross-sectional view of a bead portion of the tire 10 according to the first embodiment that is fitted to a rim. As illustrated in FIG. 1A, the tire 10 has a cross-sectional shape that is substantially the same as that of a rubber-made pneumatic tire conventionally and generally used. As illustrated in FIG. 1A, the tire 10 includes a tire case 17 consisting of: a pair of bead portions 12, which are each in contact with a bead sheet 21 and a rim flange 22 of a rim 20 illustrated in FIG. 1B; side portions 14, which extend to the tire radial-direction outer side from the respective bead portions 12; and a crown portion 16 (i.e., outer circumferential portion), which connects a tire radial-direction outer end of one side portion 14 with a tire radial-direction outer end of the other side portion 14.

Tire case 17 corresponds to the tire frame and is formed from the above-described resin material. In the first embodiment, the tire case 17 is entirely formed from the above-described resin material; however, the disclosure is not restricted to this constitution. In the same manner as in a rubber-made pneumatic tire conventionally and generally used, different resin materials may be used for each of the parts (e.g., side portions 14, crown portion 16 and bead portions 12) of the tire case 17. Further, a reinforcing material (e.g., a fiber, a cord, a nonwoven fabric, or a woven fabric made of a polymer material or a metal) may be embedded in each part of the tire case 17 so as to reinforce each part of the tire case 17.

The tire case 17 of the first embodiment is formed by preparing two tire case half sections (i.e., tire frame pieces) each having a shape in a state of the tire case 17 being equally divided in the tread width along the circumferential direction, and subsequently bonding these tire case half sections together at the tire equatorial plane. The tire case 17 is not restricted to be formed by bonding two members (i.e., two tire case half sections) and may be formed by bonding three or more members.

The tire case half sections can be prepared by, for example, vacuum molding, pressure molding, injection molding, or melt casting. Accordingly, as compared to a conventional case where a tire case is molded from a rubber, the production process can be greatly simplified and the molding time can be shortened since it is not necessary to perform vulcanization.

In the first embodiment, in the same manner as in a pneumatic tire conventionally and generally used, an annular bead core 18 is embedded in the bead portion 12 illustrated in FIG. 1B. In the first embodiment, a steel cord is used as bead core 18; however, an organic fiber cord, a resin-coated organic fiber cord, a hard resin cord or the like may be used as well. It is noted here that the bead core 18 can be omitted as long as the rigidity of the bead portion 12 is ensured and the bead portion 12 is favorably fitted with the rim 20.

In the first embodiment, an annular sealing layer 24 composed of a material having superior sealing performance than the resin material constituting the tire case 17 is formed on a part of each bead portion 12 that comes into contact with the rim 20, or at least on a part of each bead portion 12 that comes into contact with the rim flange 22 of the rim 20. The sealing layer 24 may also be formed on the parts where each bead portion 12 of the tire case 17 comes into contact with the bead sheet 21. The sealing layer 24 may be omitted as long as the resin material constituting the tire case 17 alone can ensure sealing performance with the rim 20. Examples of the material having superior sealing performance than the resin material constituting the tire case 17 include a material softer than the resin material constituting the tire case 17, such as a rubber; and a thermoplastic resin and a thermoplastic elastomer that are softer than the resin material.

As illustrated in FIG. 1A, in the crown portion 16, a reinforcing cord 26 having higher rigidity than the resin material constituting the tire case 17 is wound in the circumferential direction of the tire case 17. In a cross-sectional view taken along the axial direction of the tire case 17, the reinforcing cord 26 is helically wound with at least a part thereof being embedded in the crown portion 16, and forms a reinforcing cord layer 28. On the tire radial-direction outer circumferential side of the reinforcing cord layer 28, a tread 30 composed of a material having superior wear resistance than the resin material constituting the tire case 17, such as a rubber, is arranged.

In the first embodiment, as illustrated in FIG. 2, the reinforcing cord 26 is in a state where a metal member 26A such as a steel cord is covered with a coating resin material 27 (i.e., a coated cord member). In the first embodiment, the same resin material as the resin material constituting the tire case 17 is used as the coating resin material 27; however, other thermoplastic resin or thermoplastic elastomer may be used as well. The reinforcing cord 26 and the crown portion 16 are bonded by a method of welding, adhesion using an adhesive or the like in those parts where they are in contact with each other. The reinforcing cord 26 may be a steel cord or the like not being covered with the coating resin material 27.

The elastic modulus of the coating resin material 27 is preferably set in a range of from 0.1 times to 10 times of the elastic modulus of the resin material constituting the tire case 17. When the elastic modulus of the coating resin material 27 is 10 times or less of that of the resin material constituting the tire case 17, the crown portion is prevented from being excessively hard, so that the tire can be easily fitted to a rim. When the elastic modulus of the coating resin material 27 is 0.1 times or greater of that of the resin material constituting the tire case 17, since the resin constituting the reinforcing cord layer 28 is not excessively soft, excellent belt in-plane shear rigidity is attained and the cornering

ability is improved.

In the first embodiment, as illustrated in FIG. 2, the reinforcing cord 26 has a substantially trapezoidal cross-sectional shape. In the following descriptions, the upper surface of the reinforcing cord 26 (i.e., the surface on the tire radial-direction outer side) is represented by a symbol 26U, and the lower surface of the reinforcing cord 26 (i.e., the surface on the tire radial-direction inner side) is represented by a symbol 26D. Further, in the first embodiment, the reinforcing cord 26 is configured to have a substantially trapezoidal cross-sectional shape; however, the disclosure is not restricted to this constitution. The reinforcing cord 26 may take any shape, except a shape in which the cross-sectional width increases from the side of the lower surface 26D (i.e., tire radial-direction inner side) toward the side of the upper surface 26U (i.e., tire radial-direction outer side).

As illustrated in FIG. 2, since the reinforcing cord 26 is disposed with gaps in the circumferential direction, gaps 28A are formed between the adjacent reinforcing cords 26. Accordingly, the outer circumferential surface of the reinforcing cord layer 28 is shaped to have irregularities, and an outer circumferential surface 17S of the tire case 17 whose outer circumferential portion is constituted by the reinforcing cord layer 28 is also shaped to have irregularities.

On the outer circumferential surface 17S (including the above-described irregularities) of the tire case 17, finely roughened irregularities 96 are formed, and a cushion rubber 29 is bonded thereon via a bonding agent. The cushion rubber 29 flows in such a manner to fill the roughened irregularities 96 at the surface in contact with the reinforcing cord 26.

On the cushion rubber 29 (i.e., on the side of the tire outer circumferential surface), the above-described tread 30 is bonded. On the surface of the tread 30 that comes into contact with the road surface, a tread pattern (not illustrated) constituted by plural grooves is formed in the same manner as in a conventional rubber-made pneumatic tire.

[Tire Production Method]

Next, a method of producing the tire of the present embodiment will be described using a method of producing the above-described tire according to the first embodiment as an example.

(Tire Case Molding Step)

First, tire case half sections are molded by injection molding or the like (molding step). For example, by adjusting the temperature of the resin material in this molding step, such as the cylinder temperature or the mold temperature in the case of injection molding, the amorphous moiety thickness La, the long period L, the orientation degree f, the crystallization degree Xc and the like of the thermoplastic elastomer contained in the tire case can be controlled in the above-described respective ranges.

The cylinder temperature is preferably in a range of from 240°C to 290°C, more preferably in a range of from 240°C to 260°C, still more preferably in a range of from 240°C to 245°C.

Further, the mold temperature is preferably in a range of from 50°C to 110°C, more preferably in a range of from 50°C to 80°C, still more preferably in a range of from 50°C to 55°C.

The control of the amorphous moiety thickness La, the long period L, the orientation degree f, the crystallization degree Xc and the like of the thermoplastic elastomer is believed to be affected by the adjustment of the cooling rate and the cooling time of the resin material in the molding step. Accordingly, the cooling rate is preferably in a range of from 140°C/sec to 240°C/sec, more preferably in a range of from 140°C/sec to 230°C/sec. The cooling time (i.e., the time required for cooling the resin material to the mold temperature) is preferably in a range of from 1 second to 5 seconds, more preferably in a range of from 1 second to 1.5 seconds.

Next, the annular tire case half sections obtained in the molding step are aligned to face each other and bonded at the tire equatorial plane to form a tire case (bonding step). The tire case is not restricted to be formed by bonding two members, and may be formed by bonding three or more members.

The bonding will now be described. First, the tire case half sections each supported on a thin metal support ring are aligned to face each other. Subsequently, a bonding mold is set such that it comes into contact with the outer circumferential surfaces of the abutting parts of the tire case half sections. The bonding mold is configured in such a manner to press the peripheries of the bonding parts (i.e., abutting parts) of the tire case half sections with a prescribed pressure. Then, the peripheries of the bonding parts of the tire case half sections are pressed at a temperature of not lower than the melting point of the resin material constituting the tire case, whereby the bonding parts are melted and the tire case half sections are fused and integrated, as a result of which the tire case 17 is formed.

The amorphous moiety thickness La, the long period L, the orientation degree f, the crystallization degree Xc and the like of the tire case 17 can be controlled in the above-described respective ranges also by, for example, adjusting the temperature of the resin material, such as the temperature of the bonding mold, in this bonding step.

In the production method of the first embodiment, the bonding parts of the tire case half sections are heated using the bonding mold; however, the disclosure is not restricted to this mode. The tire case half sections may be bonded together by, for example, heating the bonding parts using a separately arranged high-frequency heater or the like, or

softening or melting the bonding parts in advance by hot air, irradiation with infrared radiation or the like, and subsequently applying a pressure to the bonding parts using a bonding mold.

(Reinforcing Cord Member Winding Step)

Next, the step of winding the reinforcing cord 26 on the tire case 17 will be described referring to FIG. 3. FIG. 3 is a drawing for explaining operations of embedding the reinforcing cord 26 in the crown portion of the tire case 17 using a cord heating device and rollers.

In FIG. 3, a cord feeding apparatus 56 includes: a reel 58, on which the reinforcing cord 26 is wound; a cord heating device 59, which is arranged on the cord transfer direction downstream side of the reel 58; a first roller 60, which is arranged on the reinforcing cord 26 transfer direction downstream side; a first cylinder device 62, which moves the first roller 60 in a direction toward or away from the tire outer circumferential surface; a second roller 64, which is arranged on the reinforcing cord 26 transfer direction downstream side of the first roller 60; and a second cylinder device 66, which moves the second roller 64 in a direction toward or away from the tire outer circumferential surface. The second roller 64 can be utilized as a cooling roller made of a metal.

In the first embodiment, the surface of the first roller 60 or that of the second roller 64 is treated (e.g., coated with a fluorine resin) so as to inhibit adhesion of the melted or softened coating resin material 27. However, the disclosure is not restricted to this mode, and the rollers themselves may be formed from a material to which the coating resin material 27 hardly adheres. In the first embodiment, the cord feeding apparatus 56 have two rollers, which are the first roller 60 and the second roller 64; however, the disclosure is not restricted to this mode, and the cord feeding apparatus 56 may have only one of these rollers.

The cord heating device 59 includes a heater 70 and a fan 72, which generate a hot air flow. The cord heating device 59 further includes: a heating box 74, in which the reinforcing cord 26 is passed through an inner space where the hot air flow is supplied; and a discharge outlet 76, through which the thus heated reinforcing cord 26 is discharged.

In this step, first, the temperature of the heater 70 of the cord heating device 59 is increased, and the ambient air heated by the heater 70 is sent to the heating box 74 with an air flow generated by rotation of the fan 72. Then, the reinforcing cord 26 rolled out from the reel 58 is transferred into the heating box 74 whose inner space has been heated with the hot air flow, whereby the reinforcing cord 26 is heated. The heating temperature is set such that the coating resin material 27 of the reinforcing cord 26 is brought into a molten or softened state.

The thus heated reinforcing cord 26 passes through the discharge outlet 76 and is helically wound with a constant tension on the outer circumferential surface of the crown portion 16 of the tire case 17 rotating in the direction of an arrow R as illustrated in FIG. 3. In this process, the lower surface 26D of the reinforcing cord 26 is brought into contact with the outer circumferential surface of the crown portion 16. The coating resin material 27 in a state of being melted or softened by heating spreads on the outer circumferential surface of the crown portion 16, whereby the reinforcing cord 26 is melt-adhered onto the outer circumferential surface of the crown portion 16. As a result, the bonding strength between the crown portion 16 and the reinforcing cord 26 is improved.

In the first embodiment, the reinforcing cord 26 is bonded to the outer circumferential surface of the crown portion 16 in the above-described manner; however, the disclosure is not restricted to this mode, and the bonding may be performed by other method as well. For example, the bonding may be performed such that the reinforcing cord 26 is partially or entirely embedded in the crown portion 16.

(Roughening Treatment Step)

Subsequently, using a blasting apparatus not illustrated in the drawing, a blasting abrasive is ejected at a high speed toward the outer circumferential surface 17S of the tire case 17 with tire case 17 being rotated. The ejected blasting abrasive collides with the outer circumferential surface 17S to form finely roughened irregularities 96, which have an arithmetic average roughness (Ra) of not less than 0.05 mm, on the outer circumferential surface 17S. By the formation of the finely roughened irregularities 96 on the outer circumferential surface 17S of the tire case 17 in this manner, the outer circumferential surface 17S is hydrophilized, so that the wettability with the below-described bonding agent is improved.

(Layering Step)

Next, a bonding agent for bonding the cushion rubber 29 is applied onto the thus roughened outer circumferential surface 17S of the tire case 17. The bonding agent is not particularly restricted and, for example, a triazine thiol-based adhesive, a chlorinated rubber-based adhesive, a phenolic resin adhesive, an isocyanate-based adhesive, a halogenated rubber-based adhesive, or a rubber-based adhesive can be used. The bonding agent is preferably one which reacts at a temperature at which the cushion rubber 29 can be vulcanized (e.g., from 90°C to 140°C).

Then, the cushion rubber 29 in an unvulcanized state is wound for one lap on the outer circumferential surface 17S to which the bonding agent has been applied, and a bonding agent such as a rubber cement composition is further applied onto the cushion rubber 29, after which a tread rubber 30A in a vulcanized or semi-vulcanized state is wound for one lap on the cushion rubber 29 to which the bonding agent has thus been applied, whereby a green tire case is obtained.

(Vulcanization Step)

Next, the thus obtained green tire case is vulcanized in a vulcanization can or a mold. In the process, the unvulcanized cushion rubber 29 flows into the roughened irregularities 96 that have been formed on the outer circumferential surface 17S of the tire case 17 by the roughening treatment. Once the vulcanization is completed, an anchoring effect is exerted by the cushion rubber 29 that has flowed into the roughened irregularities 96, and the bonding strength between the tire case 17 and the cushion rubber 29 is thereby improved. In other words, the bonding strength between the tire case 17 and the tread 30 is improved by means of the cushion rubber 29.
Thereafter, the above-described sealing layer 24 is adhered to each bead portion 12 of the tire case 17 using an adhesive or the like, whereby the tire 10 is completed.
Thus far, embodiments of the disclosure have been described taking the first embodiment as an example; however, these embodiments are merely examples, and the disclosure can be carried out with various modifications within a range that does not depart from the spirit of the disclosure. It is needless to say that the scope of the rights of the invention is not limited to these embodiments. For the details of embodiments applicable to the disclosure, reference can be made to, for example, JP-ANo. 2012-46025.
As described above, according to the disclosure, the following tires are provided.

<1> According to a first aspect of the disclosure, a tire comprising a tire frame formed from a resin material containing a thermoplastic elastomer is provided, wherein the thermoplastic elastomer has an amorphous moiety thickness La, as measured by a small-angle X-ray scattering method, in a range of from 12.3 nm to 13.9 nm.
<2> According to a second aspect of the disclosure, a tire according to the first aspect is provided, wherein the thermoplastic elastomer has a long period L, as measured by a small-angle X-ray scattering method, in a range of from 15.6 nm to 17.1 nm.
<3> According to a third aspect of the disclosure, a tire according to the first or second aspect is provided, wherein the thermoplastic elastomer has an orientation degree f, as measured by a small-angle X-ray scattering method, in a range of from -0.08 to 0.08.
<4> According to a fourth aspect of the disclosure, a tire according to any one of the first to third aspects is provided, wherein the thermoplastic elastomer is a polyester-based thermoplastic elastomer.

EXAMPLES

The disclosure will now be described more concretely by way of examples thereof. It is noted here, however, that the disclosure is not restricted thereto.

[Tire Production]

As tires of Examples and Comparative Examples, tires having the above-described constitution of the first embodiment were each produced by a known method. As the resin material constituting the tire frame, a polyester-based thermoplastic elastomer whose hard segment and soft segment were a polyester and a polyether, respectively, was used.
For the process of molding tire case half sections in Examples and Comparative Examples, the cylinder temperature, the mold temperature, the cooling rate and the cooling time in injection molding were set as shown in Table 1.
For the preparation of a reinforcing cord, first, an adhesive layer was formed by adhering a heat-melted acid-modified polypropylene to a multifilament having an average diameter of 1.15 mm (specifically, a twisted cord obtained by twisting five monofilaments of 0.35 mm in average diameter (made of steel, strength: 280 N, elongation: 3%)). Then, the thus formed adhesive layer was coated with a polyamide-based thermoplastic elastomer (trade name "XPA9055", manufactured by Ube Industries, Ltd.) extruded from an extruder, and the resultant was subsequently cooled, whereby a reinforcing cord was prepared.

• Measurement of Amorphous Moiety Thickness La, Long Period L, Orientation Degree f, and Crystallization Degree Xc

Using a sample prepared from the tire case of each of the thus produced tires, the amorphous moiety thickness

La, the long period L, and the orientation degree f of the thermoplastic elastomer were measured by a small-angle X-ray scattering method. In addition, the crystallization degree Xc was measured by a wide-angle X-ray scattering method.

As a measuring apparatus, NANO-VIEWER (trade name) manufactured by Rigaku Corporation was employed, and the measurement conditions were adjusted as follows.

-Measurement Conditions-

• Measurement at room temperature

• X-ray irradiation time: 30 minutes

The measurement results are shown in Table 1.

[Evaluation of Durability]

The durability of each tire produced in Examples and Comparative Examples was evaluated in accordance with the below-described Crack Propagation Resistance Test (Measurement of Crack Growth Rate DC/DN) and BF Drum Test. The results thereof are shown in Table 1.

-Crack Propagation Resistance Test (Measurement of Crack Growth Rate DC/DN)-

A dumbbell-shaped test piece (No. 7 test piece) prescribed in JIS K6251:1993 was prepared from a sample prepared from the tire case of each of the above-produced tires.

A precrack of 0.5 mm was made on the thus obtained test piece, and the crack growth rate DC/DN [mm/cycle] was measured using an electromagnetic SERVOPULSER manufactured by Shimadzu Corporation. The measurement conditions were set as follows: temperature = 40°C, strain = 3%, frequency = 17 Hz. A larger value indicates superior crack propagation resistance.

-BF Drum Test-

A test tire having a size of 195/65R15 was produced by the above-described method and, after adjusting the internal pressure of this test tire to be 3.0 kg/cm$^2$ in a room of 25 $\pm$ 2°C, the test tire was left to stand for 24 hours. Then, the air pressure was adjusted again, after which a load of 540 kg was applied to the tire, and the tire was allowed to run on a drum of about 3 m in diameter at a speed of 60 km/h over a distance of 20,000 km and evaluated based on the following criteria. An evaluation result of "A" or "B" is considered to indicate that the tire is suitable for use.

"A": An external damage such as a crack was not observed after the completing of the running.
"B": The running was completed, and an external damage such as a crack that did not cause any problem for running was observed.
"C": The running could not be completed, or an external damage such as a crack that caused a problem for running was observed.

Table 1

| | Example 1 | Example 2 | Example 3 | Example 4 | Example 5 | Example 6 | Comparative Example 1 | Comparative Example 2 |
|---|---|---|---|---|---|---|---|---|
| Resin material type | TPC | TPC | TPC | TPC | TPC | TPC | TPC | TPC |
| Resin material model | HYTREL 5557 | HYTREL 5557 | HYTREL 5557 | HYTREL 5557 | HYTREL 5557 | HYTREL 5557/HYTREL 4767N (=25/75) | HYTREL 5557 | HYTREL 5557 |
| Cylinder temperature [°C] | 240 | 290 | 280 | 240 | 280 | 240 | 235 | 285 |
| Mold temperature [°C] | 100 | 50 | 50 | 50 | 100 | 110 | 50 | 100 |
| Cooling time [sec] | 1 | 1 | 1 | 1 | 1 | 1 | 1 | 1 |
| Cooling rate [°C/sec] | 140 | 240 | 230 | 190 | 180 | 130 | 185 | 185 |
| Amorphous moiety thickness La [nm] | 13.4 | 12.8 | 13.0 | 13.7 | 12.5 | 13.2 | 14.0 | 12.2 |
| Long period L [nm] | 16.7 | 16.1 | 16.2 | 17.0 | 15.8 | 16.4 | 17.2 | 15.5 |
| Orientation degree f | -0.001 | -0.01 | -0.002 | -0.05 | -0.08 | 0.001 | 0.08 | 0.075 |
| Crystallization degree Xc [%] | 12 | 25 | 20 | 28 | 28 | 13 | 30 | 30 |
| DC/DN [cycle] | $9.3 \times 10^6$ | $6.0 \times 10^6$ | $7.3 \times 10^6$ | $4.3 \times 10^6$ | $3.0 \times 10^6$ | $8.8 \times 10^6$ | $1.5 \times 10^6$ | $2.0 \times 10^6$ |
| BF drum test | A | A | A | B | B | A | C | C |

The details of the thermoplastic elastomers shown in Table 1 are as follows.

- HYTREL 5557 (a polyester-based thermoplastic elastomer, manufactured by DuPont-Toray Co., Ltd., crystallization temperature: 163°C)
- HYTREL 4767N (a polyester-based thermoplastic elastomer, manufactured by DuPont-Toray Co., Ltd., crystallization temperature: 155°C)

It is noted here that, in Example 6, HYTREL 5557 and HYTREL 4767N were mixed at a ratio of "25/75" in terms of mass ratio.
As shown in Table 1, it is seen that the tires of Examples which had a tire case formed using a thermoplastic elastomer having an amorphous moiety thickness La in a range of from 12.3 nm to 13.9 nm exhibited superior durability than the tires of Comparative Examples which had a tire case formed using a thermoplastic elastomer having an amorphous moiety thickness La outside the above-described range.
The disclosure of Japanese Patent Application No. 2017-082200 is incorporated herein by reference in its entirety.
All publications, patent applications, and technical standards mentioned in this specification are herein incorporated by reference to the same extent as if each individual publication, patent application, or technical standard was specifically and individually indicated to be incorporated by reference.

## Claims

1. A tire, comprising a tire frame formed from a resin material containing a thermoplastic elastomer, wherein the thermoplastic elastomer has an amorphous moiety thickness La, as measured by a small-angle X-ray scattering method, in a range of from 12.3 nm to 13.9 nm.

2. The tire according to claim 1, wherein the thermoplastic elastomer has a long period L, as measured by a small-angle X-ray scattering method, in a range of from 15.6 nm to 17.1 nm.

3. The tire according to claim 1 or 2, wherein the thermoplastic elastomer has an orientation degree f, as measured by a small-angle X-ray scattering method, in a range of from -0.08 to 0.08.

4. The tire according to any one of claims 1 to 3, wherein the thermoplastic elastomer is a polyester-based thermoplastic elastomer.

FIG.1A

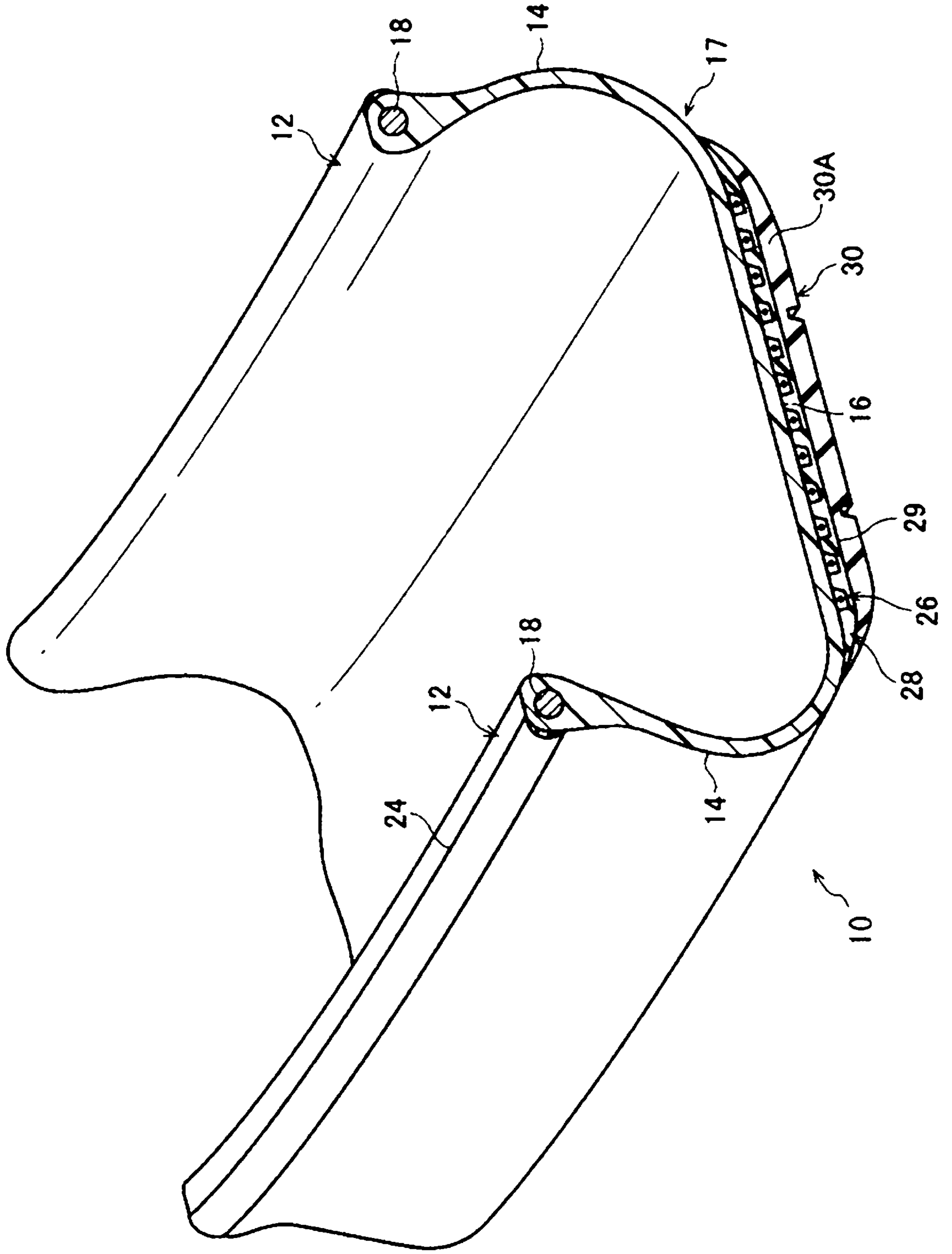

FIG.1B

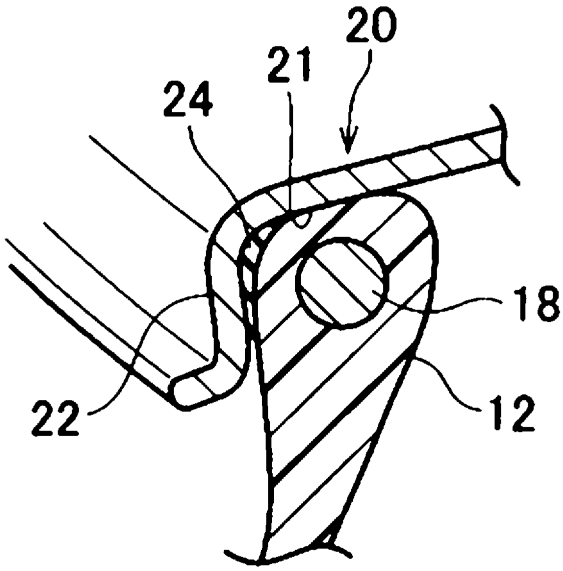

FIG.2

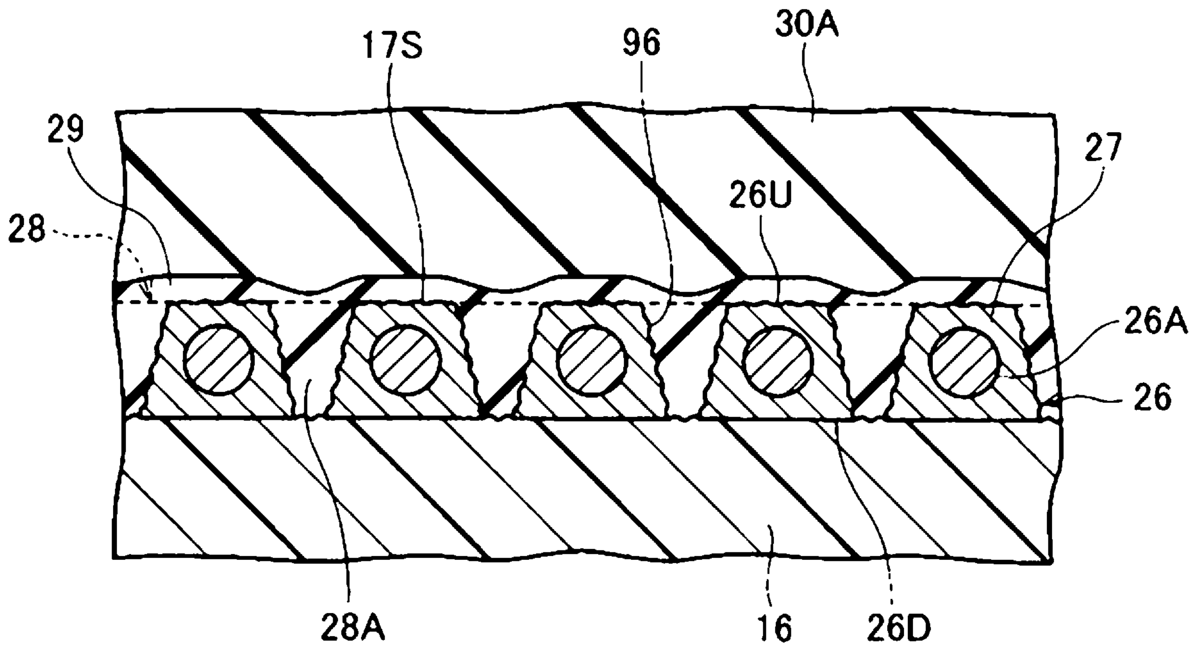

FIG.3

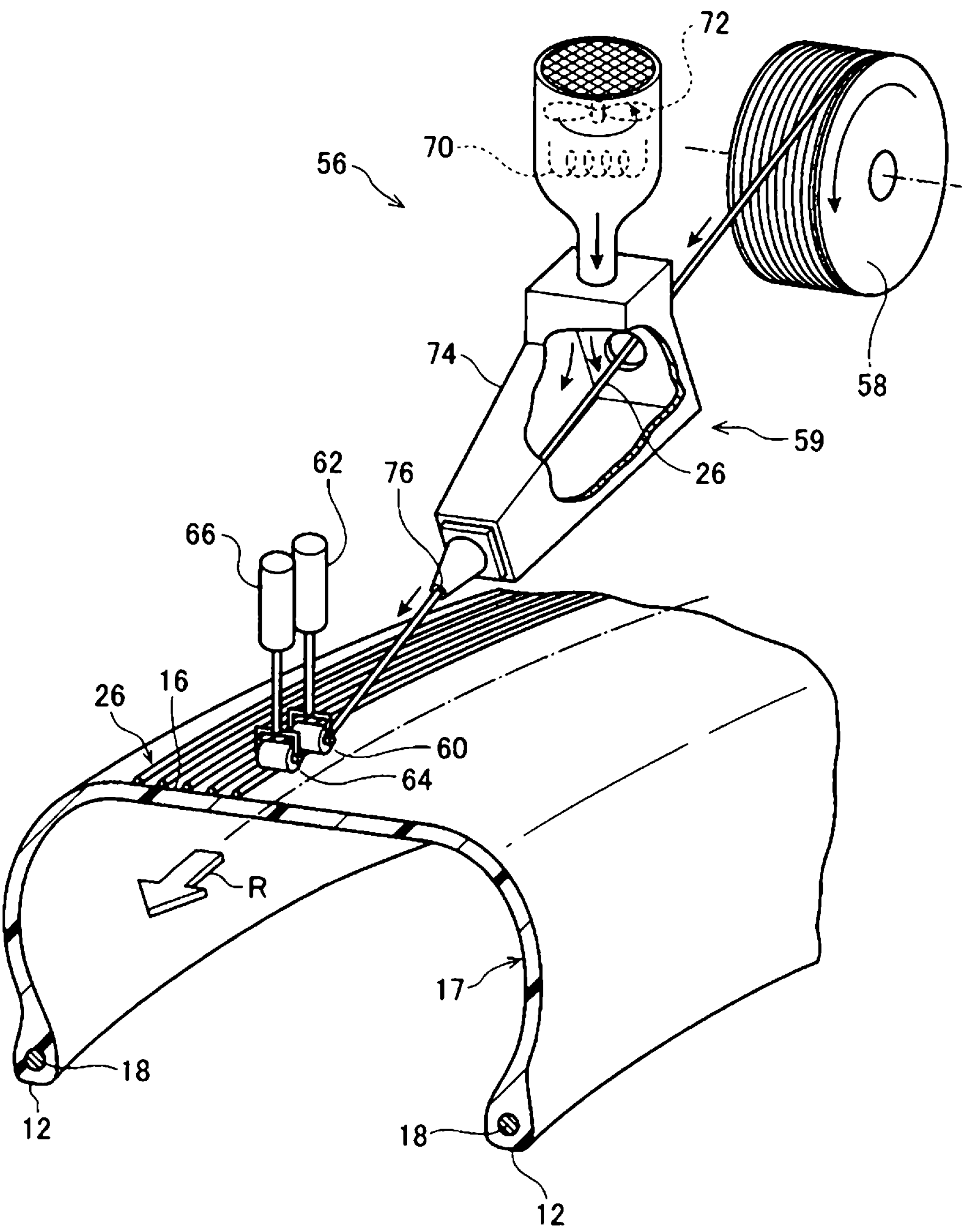

**INTERNATIONAL SEARCH REPORT**

International application No.
PCT/JP2018/013439

A. CLASSIFICATION OF SUBJECT MATTER
Int. Cl. B60O5/01(2006.01)i, B60C1/00(2006.01)i

According to International Patent Classification (IPC) or to both national classification and IPC

B. FIELDS SEARCHED

Minimum documentation searched (classification system followed by classification symbols)
Int. Cl. B29C33/00-33/76, 39/26-39/36, 41/38-41/44, 43/36-43/42, 43/50, 45/00-45/84, 49/48-49/56, 49/70, 51/30-51/40, 51/44, B29D30/00-30/72, B60C1/00-19/12

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2014-198779 A (BRIDGESTONE CORP.) 23 October 2014, claims & US 2016/0039973 A1, claims & WO 2014/156740 A1 & EP 2980120 A1 & CN 105189610 A | 1-4 |
| A | JP 2008-308636 A (TOYOBO CO., LTD.) 25 December 2008, claims (Family: none) | 1-4 |
| A | WO 2011/074473 A1 (ARONKASEI CO., LTD.) 23 June 2011, claims (Family: none) | 1-4 |
| A | JP 2000-191928 A (SUMITOMO RUBBER INDUSTRIES, LTD.) 11 July 2000, claims (Family: none) | 1-4 |

☒ Further documents are listed in the continuation of Box C.　☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 22.06.2018 | 03.07.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2018/013439

C (Continuation). DOCUMENTS CONSIDERED TO BE RELEVANT

| Category* | Citation of document, with indication, where appropriate, of the relevant passages | Relevant to claim No. |
|---|---|---|
| A | WO 2008/026509 A1 (NATIONAL INSTITUTE OF ADVANCED INDUSTRIAL SCIENCE AND TECHNOLOGY) 06 March 2008, claims (Family: none) | 1-4 |
| P, A | WO 2017/146038 A1 (BRIDGESTONE CORP.) 31 August 2017, claims (Family: none) | 1-4 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012046025 A
- JP 2004346273 A
- JP H05331256 A
- JP 2017082200 A